# FASCICULE DE BREVET EUROPEEN

(11) **EP 2 767 111 B1**
(45) Date de publication et mention de la délivrance du brevet: **30.09.2020**
(21) Numéro de dépôt: 12781392.1
(22) Date de dépôt: 12.10.2012
(51) Int. Cl.: H04W 12/04, H04L 29/06

(54) **PROCÉDÉ DE TRANSFERT DU CONTRÔLE D'UN MODULE DE SÉCURITÉ D'UNE PREMIÈRE ENTITÉ À UNE DEUXIÈME ENTITÉ**
VERFAHREN ZUR ÜBERGABE DER STEUERUNG EINES SICHERHEITSMODULS VON EINER ERSTEN AN EINE ZWEITE EINHEIT
METHOD OF TRANSFERRING THE CONTROL OF A SECURITY MODULE FROM A FIRST ENTITY TO A SECOND ENTITY

(30) Priorité: 14.10.2011 FR 1159294
(43) Date de publication de la demande: 20.08.2014
(73) Titulaire: ORANGE, 75015 Paris (FR)
(72) Inventeur: SAIF, Ahmad, F-14210 Avenay (FR); PLADEAU, Bertrand, F-14610 Thaon (FR)
(86) Numéro de dépôt international: PCT/FR2012/052338
(87) Numéro de publication internationale: WO 2013/054065

(56) Documents cités:
- WO-A1-2010/123890
- US-A1- 2010 062 808

## Description

L'invention concerne un procédé de transfert du contrôle d'un module de sécurité d'une première entité à une deuxième entité.

L'invention trouve une application particulièrement intéressante dans des domaines tels que ceux de la téléphonie mobile, ou de la communication de machine à machine (le terme habituellement utilisé est le terme « M2M », de l'anglais « Machine To Machine »). Dans ces domaines, des équipements, comme un téléphone mobile ou une machine équipée de capteurs, embarquent un module de sécurité (le terme habituellement utilisé est le terme anglais « Secure Element »), par exemple une carte (U)SIM (de l'anglais "Universal Subscriber Identity Module"), préconfiguré pour fonctionner avec un premier opérateur de réseau. A cette fin, des clés propres à un gestionnaire du module, par exemple l'opérateur de réseau dans le cas d'une carte (U)SIM, et au module de sécurité sont préinstallées sur le module avant sa mise en service. Ainsi, une fois le module mis en circulation, le premier opérateur de réseau contrôle la carte, et est le seul à pouvoir installer des applications sur la carte, faire des mises à jour, authentifier la carte (U)SIM, etc.

Lorsqu'un abonné au premier réseau souhaite changer d'opérateur, il est nécessaire de remplacer dans l'équipement le module de sécurité configuré pour le premier opérateur par un deuxième module de sécurité configuré pour le deuxième opérateur, c'est-à-dire qui comprend des clés propres au deuxième opérateur. On comprend que dans le cas de machines M2M interconnectées qui utilisent le réseau du premier opérateur pour permettre à un serveur central d'échanger des informations à distance avec ces machines, un changement d'opérateur nécessite de changer les cartes (U)SIM de toutes les machines et nécessite donc le déplacement d'un technicien pour effectuer ce changement. Cela est d'autant plus contraignant qu'il n'est pas rare que les machines soient difficiles d'accès. Par ailleurs, lorsque les modules de sécurité ne sont pas amovibles, mais soudés à l'équipement, un tel changement nécessite le remplacement de l'équipement.

Des solutions existent pour modifier des clés d'opérateurs sur une carte (U)SIM sans changer le module de sécurité. Par exemple, la demande publiée sous le numéro WO2011001076 décrit un procédé de changement d'une première clé d'authentification et d'un premier numéro d'identification d'abonné sur une carte (U)SIM, propres à un premier opérateur de réseau opérant un premier réseau, par une deuxième clé d'authentification et un deuxième numéro d'identification d'abonné, propres à un deuxième opérateur de réseau opérant un deuxième réseau. A cette fin, une clé maîtresse de génération de clés propre au deuxième réseau est mémorisée dans la carte lors d'une phase de pré-configuration réalisée avant la mise en service de la carte. Ainsi, lorsque la carte est mise en circulation pour fonctionner dans le premier réseau et qu'une demande de changement vers le deuxième opérateur est reçue, le deuxième opérateur transmet au premier opérateur un deuxième numéro d'identification d'abonné dans le deuxième réseau. Le premier opérateur transmet à la carte (U)SIM, à travers son réseau un aléa et le deuxième numéro d'identification d'abonné reçu, il envoie également l'aléa au deuxième opérateur de réseau. La carte génère ensuite une deuxième clé d'authentification en appliquant un algorithme de diversification de clés à l'aléa et à la clé maîtresse mémorisée dans la carte et propre au deuxième réseau. De son côté, le deuxième opérateur calcule la même clé d'authentification avec la même clé maîtresse qui lui est propre et l'aléa reçu du premier réseau. Le deuxième opérateur mémorise dans sa base d'abonnés, la deuxième clé d'authentification en association avec le deuxième numéro d'identification d'abonné. Au terme du procédé, la première clé d'authentification est remplacée dans la carte par la deuxième clé d'authentification et le premier numéro d'identification d'abonné est remplacé dans la carte par le deuxième numéro d'identification d'abonné. Ainsi, la carte (U)SIM est prête à fonctionner dans le deuxième réseau.

Cependant, cela nécessite de mémoriser les clés maîtresses propres à tous les opérateurs vers lesquels on est susceptible d'opérer un transfert du contrôle de la carte. Par ailleurs il y a des risques qu'on ne puisse pas transférer le contrôle de cartes vers un nouvel opérateur lorsque les cartes ont été préconfigurées préalablement à l'arrivée de cet opérateur.

Une solution à ce problème est par ailleurs décrite dans le document WO2010 / 123890 A1 (« System of multiple domains and domain ownership ») de la société Interdigital. Le document enseigne la gestion de plusieurs domaines sécurisés dans des cartes d'identité d'abonnés (SIM, par exemple). Un tel procédé n'est pas adapté aux modules de sécurité existants.

L'invention remédie aux inconvénients présentés ci-dessus en proposant un procédé de transfert du contrôle d'un module de sécurité d'une première entité à une deuxième entité, le module de sécurité comprenant un premier domaine de sécurité contrôlé par la première entité au moyen d'au moins une première clé secrète de contrôle propre à la première entité, et un deuxième domaine de sécurité, ledit deuxième domaine comprenant un certificat d'une clé publique d'une autorité de contrôle et une clé privée de l'autorité de contrôle, le procédé comprenant les étapes, mises en œuvre par le module de sécurité, de :
- réception par le deuxième domaine de sécurité d'une requête d'obtention du certificat en provenance de la deuxième entité,
- envoi dudit certificat par le deuxième domaine de sécurité,
- réception par le premier domaine de sécurité en provenance de la deuxième entité de données chiffrées au moyen de la clé publique certifiée par ledit certificat, les données comprenant au moins une deuxième clé secrète de contrôle propre à la deuxième entité,
- déchiffrement desdites données par le deuxième domaine de sécurité,
- vérification des données par le premier domaine de sécurité, et
- si la vérification est positive, remplacement par le premier domaine de sécurité de la au moins première clé secrète de contrôle par ladite au moins deuxième clé secrète de contrôle.

Le procédé de l'invention permet ainsi de mettre à jour des données de sécurité d'un module de sécurité multi-applicatif sans installation préalable, c'est-à-dire avant la mise en service du module, de données de configuration initiales. De telles données de sécurité sont des clés propres à l'émetteur du module, utilisées dans toutes les procédures sensibles mises en œuvre sur, et pour le module de sécurité. Ainsi, le procédé est adapté aux modules de sécurité existants et ne nécessite qu'une mise à jour logicielle de ces modules. La mise à jour logicielle est destinée à permettre aux modules de sécurité de mettre en œuvre le procédé de l'invention. Une telle mise à jour peut être faite à distance.

Un tel procédé est particulièrement adapté à des environnements où le module de sécurité, par exemple une carte (U)SIM, est soudée à l'équipement qui l'héberge (l'expression habituellement utilisée dans ce cas est « SIM on Chip »). La carte SIM soudée est une solution qui peut être préférée dans le cas de machines M2M qui fonctionnent dans des conditions environnementales difficiles. En effet, la solution carte SIM soudée présente des avantages par rapport à une carte SIM amovible classique, par exemple ceux d'avoir une meilleure tenue mécanique et de fonctionner dans des plages de températures plus élevées. Le procédé de l'invention apporte ainsi une solution au problème de transfert du contrôle d'une carte SIM soudée, par exemple dans des environnements M2M.

La requête de transfert du contrôle peut provenir de l'émetteur de la carte. Elle peut également provenir d'une entité tierce de confiance. Une telle entité peut être par exemple une autorité de confiance reconnue, ou l'entité vers laquelle le contrôle doit être transféré, si une autorité de confiance supérieure certifie que l'entité est de confiance. Une telle chaîne de confiance peut être mise en place au moyen de certificats.

Selon un exemple de réalisation, le procédé comprend une étape de réception en provenance de la première entité d'une requête de transfert du contrôle vers la deuxième entité.

Cet exemple de réalisation illustre le cas où la requête de transfert du contrôle du module provient de la première entité, c'est-à-dire celle qui au départ contrôle le module de sécurité.

Dans cet exemple, la requête de transfert comprend un certificat de la deuxième entité.

Joindre le certificat de la deuxième entité dans la requête de transfert du contrôle envoyée au domaine de sécurité de l'émetteur permet au module de sécurité de contrôler que la prise de contrôle est bien effectuée par l'entité identifiée dans la requête de transfert.

Dans un autre exemple de réalisation, la requête de transfert comprend un identifiant unique de la deuxième entité.

Joindre un identifiant unique de la deuxième entité dans la requête de transfert envoyée au domaine de sécurité de l'émetteur apporte un moyen supplémentaire de vérification de l'identité de l'entité qui va prendre le contrôle du module.

Dans un exemple de réalisation, le procédé comprend une étape de calcul et d'envoi par le premier domaine de sécurité à la première entité d'un jeton unique signé.

Cet exemple de réalisation correspond au cas où un jeton unique est calculé par le domaine de sécurité de l'émetteur. Ce jeton est ensuite envoyé à la première entité, qui le retransmet à la deuxième entité. Ce jeton est destiné à garantir au domaine de sécurité de l'émetteur que la deuxième entité qui va prendre le contrôle du module est bien l'entité pour laquelle la première entité a initié un tel transfert.

Dans un exemple de réalisation du procédé, les données comprennent également le jeton unique signé par le premier domaine de l'émetteur.

Le jeton signé est compris dans les données qui sont chiffrées par la deuxième entité au moyen de la clé publique de certificat du module. Cela permet au domaine de sécurité de l'émetteur de vérifier que le jeton qu'il reçoit dans les données chiffrées correspond bien au jeton unique qu'il a généré initialement.

Dans l'exemple de réalisation où le procédé comprend une étape de calcul et d'envoi d'un jeton unique, le jeton unique comprend en outre un identifiant propre au module de sécurité.

Joindre un identifiant du module de sécurité dans le jeton permet à la deuxième entité de vérifier qu'elle transmet bien ses clés secrètes au bon module de sécurité, c'est-à-dire au module dont il souhaite effectivement prendre le contrôle.

Dans un exemple de réalisation, les données chiffrées sont signées par la deuxième entité, la vérification des données consistant à vérifier la signature des données.

Dans cet exemple de réalisation, la deuxième entité signe les données qu'elle envoie au premier domaine de sécurité de l'émetteur au moyen d'une clé privée qui lui est propre. Ainsi, le premier domaine de sécurité peut vérifier la signature des données, au moyen de la clé publique associée à la clé privée de la deuxième entité et ainsi, vérifier que les données chiffrées qui comprennent les nouvelles clés à installer sur le module proviennent bien de l'entité vers laquelle la première entité a requis de transférer le contrôle.

Avantageusement, l'étape de déchiffrement du procédé de l'invention comprend les sous-étapes de :
- envoi par le premier domaine de sécurité au domaine de sécurité de l'autorité de contrôle, d'une demande de déchiffrement desdites données,
- déchiffrement desdites données par le domaine de sécurité de l'autorité de contrôle au moyen de la clé secrète de l'autorité de contrôle,
- envoi par le domaine de sécurité de l'autorité de contrôle au premier domaine de sécurité de données déchiffrées.

La sécurisation du transfert des clés de la deuxième entité au premier domaine de sécurité est obtenue par le biais de l'autorité de contrôle, plus précisément du domaine de sécurité de l'autorité de contrôle installé sur le module de sécurité. En effet, ce domaine de sécurité représente une entité tierce de confiance, indépendante de la première et de la deuxième entité. Cette entité de confiance est matérialisée sur le module par un couple clé privée/clé publique et un certificat de la clé publique. Ce couple de clés est avantageusement utilisé pour transmettre de manière chiffrée les clés de la deuxième entité au premier domaine de sécurité, et pour déchiffrer lesdites données chiffrées. En effet, c'est le domaine de sécurité de l'émetteur qui requiert le déchiffrement auprès du domaine de sécurité de l'autorité de contrôle, qui est la seule à détenir la clé secrète qui permet de déchiffrer les clés chiffrées par la deuxième entité au moyen de la clé publique certifiée du domaine de sécurité de l'autorité de confiance.

L'invention concerne aussi un module de sécurité, comprenant un premier domaine de sécurité et un deuxième domaine de sécurité, ledit deuxième domaine comprenant un certificat d'une clé publique d'une autorité de contrôle et une clé secrète de l'autorité de contrôle, le premier domaine de sécurité étant contrôlé par une première entité au moyen d'au moins une première clé de contrôle propre à la première entité, le module comprenant :
- des premiers moyens de réception, agencés pour recevoir une requête d'obtention du certificat en provenance d'une deuxième entité,
- des moyens d'envoi, agencés pour envoyer ledit certificat à la deuxième entité,
- des deuxièmes moyens de réception, agencés pour recevoir de la deuxième entité des données chiffrées au moyen de la clé publique certifiée par ledit certificat, les données comprenant au moins une deuxième clé secrète de contrôle propre à la deuxième entité,
- des moyens de déchiffrement, agencés pour déchiffrer lesdites données,
- des moyens de vérification, agencés pour vérifier lesdites données, et
- des moyens d'installation, agencés pour installer ladite au moins deuxième clé secrète de contrôle, la deuxième entité contrôlant alors le premier domaine de sécurité.

L'invention porte aussi sur un signal destiné à être transmis entre une première entité d'un réseau et un premier domaine de sécurité compris dans un module de sécurité contrôle par une deuxième entité, la première entité disposant préalablement d'un certificat de clé publique propre à un deuxième domaine de sécurité dudit module, le signal comprenant des données chiffrées au moyen de la clé publique certifiée par le certificat, lesdites données comprenant au moins une clé secrète propre à la première entité du réseau.

L'invention concerne aussi un programme destiné à être installé dans un module de sécurité, comprenant des instructions pour la mise en œuvre des étapes du procédé de transfert du contrôle du module d'une première entité à une deuxième entité, qui sont exécutées par le module, lorsque le programme est exécuté par un processeur.

L'invention concerne aussi un support de données sur lequel est enregistré le programme d'ordinateur selon l'invention.

De nombreux détails et avantages de l'invention seront mieux compris à la lecture de la description de modes particuliers de réalisation en référence aux dessins annexés donnés à titre non limitatif, et dans lesquels :
- la figure 1 présente les étapes d'un procédé de transfert du contrôle d'un module de sécurité d'une première entité à une deuxième entité, selon un premier exemple de réalisation de l'invention ;
- la figure 2 présente les étapes d'un procédé de transfert du contrôle d'un module de sécurité d'une première entité à une deuxième entité, selon un deuxième exemple de réalisation de l'invention ;
- la figure 3 représente un module de sécurité apte à mettre en œuvre le procédé de transfert de contrôle selon l'invention.

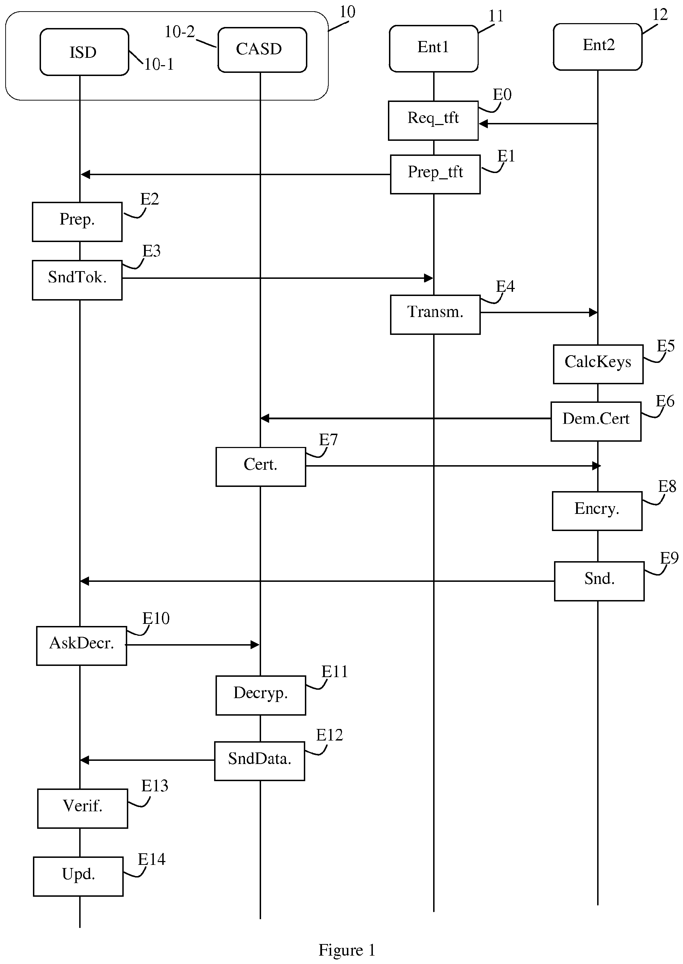

Un procédé de transfert du contrôle d'un module de sécurité d'une première entité à une deuxième entité, selon un premier exemple de réalisation va maintenant être décrit, en relation avec la figure 1.

L'invention s'applique à des modules de sécurité, par exemple un module 10, conformes aux spécifications GlobalPlatform. De telles spécifications sont accessibles dans le document : « Specifications: GlobalPlatform Card specifications v2.2 - Amendment A v1.0 ». Les spécifications GlobalPlatform décrivent des composants qui permettent de faire abstraction d'un module de sécurité, en tant que dispositif matériel, grâce à des interfaces permettant d'accéder à des applications installées sur le module. Le dispositif matériel est par exemple une carte (U)SIM (de l'anglais « Universai Subscriber Identity Module »). Selon les spécifications GlobalPlatform, un module de sécurité est structuré en plusieurs domaines de sécurité logiques. Un premier domaine de sécurité, appelé domaine de sécurité de l'émetteur (le terme anglais « Issuer Security Domain », ou « ISD » est habituellement utilisé) est le principal domaine de sécurité du module. Ce domaine de sécurité est le représentant d'une entité qui a émis le module de sécurité. Le domaine de sécurité de l'émetteur comprend des primitives cryptographiques et des clés propres à l'émetteur permettant de mettre en œuvre ces primitives. Les primitives cryptographiques sont destinées à permettre la gestion sécurisée des applications stockées sur le module. Par exemple, ces primitives sont destinées à contrôler et sécuriser des opérations d'installation, de suppression, de mise à jour, de bocage, etc. d'applications sur le module, les applications appartenant à l'émetteur du module, ou à d'autres fournisseurs d'applications. A l'instar du domaine de sécurité de l'émetteur, un module de sécurité peut également comprendre des domaines de sécurité qui représentent des fournisseurs de service sur le module, ainsi qu'un domaine de sécurité d'une autorité de contrôle (le terme habituellement utilisé est le terme anglais « Controlling Authority Security Domain », ou « CASD »). L'autorité de contrôle est une entité tierce, indépendante de l'émetteur du module de sécurité. Le domaine de sécurité de l'autorité de contrôle est optionnel et est destiné, lorsqu'il est présent, à renforcer la politique de sécurité du module. Le domaine de sécurité de l'autorité de contrôle comprend une bi-clé, c'est-à-dire un couple comprenant une clé privée et une clé publique associée, destiné à être utilisée en cryptographie asymétrique. Il comprend également un certificat public destiné à certifier la clé publique associée à la clé privée. Pour mémoire, un certificat est une carte d'identité numérique qui associe à une entité physique, ici le module de sécurité 10, une clé publique certifiée. Le certificat est délivré par une autorité de certification, ici l'entité tierce, au terme d'une procédure sécurisée préalable. Une fois le certificat délivré, la clé publique et la clé privée peuvent être utilisées par des services qui mettent en œuvre des fonctions de sécurité, par exemple un service de signature électronique, un service de chiffrement de données, etc. Un exemple connu de format de certificat est le format X.509v3. Les clés du CASD sont indépendantes de l'émetteur du module et représentent l'entité tierce de confiance. Les clés et le certificat sont installés dans le domaine de sécurité de l'autorité de contrôle en usine, par exemple par l'encarteur.

Dans l'exemple de réalisation décrit ici, le module de sécurité 10 est conforme aux spécifications GlobalPlatform présentées succinctement précédemment et comprend donc un domaine de sécurité d'un émetteur, ou ISD 10-1, ainsi qu'un domaine de sécurité d'une autorité de contrôle, ou CASD 10-2.

L'émetteur du module est ici une première entité 11, par exemple un premier opérateur de réseau mobile. Le domaine de sécurité de l'émetteur 10-1 comprend donc initialement des clés secrètes propres à cette première entité 11. Les clés sont destinées à sécuriser des échanges entre le module 10 et des entités externes au module (non représentées), à authentifier des entités externes et à authentifier le domaine de sécurité de l'émetteur 10-1 auprès de ces entités. Ainsi, suivant les besoins et les fonctionnalités associées au module de sécurité 10, une ou plusieurs clés secrètes peuvent être calculées et installées sur le module de sécurité 10. Par exemple, les clés sont des clés symétriques, destinées à être utilisées par l'algorithme cryptographique « DES » (de l'anglais « Data Encryption Standard »), ou « 3DES » (pour triple DES), en tant que primitive de base pour mettre en œuvre des fonctionnalités de sécurité telles qu'une signature électronique, une vérification de signature, etc. De tels algorithmes utilisent habituellement une ou plusieurs clés secrètes de taille 112 ou 168 bits. On comprend alors qu'un transfert du contrôle du module 10 de la première entité 11 à une deuxième entité 12 va consister à installer sur le domaine de sécurité de l'émetteur 10-1 des clés secrètes propres à la deuxième entité 12.

Dans une étape initiale E0 de demande de transfert, la première entité 11, en charge de la gestion du module 10, et donc du domaine de sécurité de l'émetteur 10-1, reçoit de la deuxième entité 12 une demande de transfert du contrôle du module 10 à son attention. La deuxième entité 12 est par exemple un deuxième opérateur de réseau mobile. La deuxième entité 12, par cette requête, demande à prendre le contrôle du module 10 à la place de la première entité 11. La requête de la deuxième entité 12 peut être consécutive à une demande d'un abonné auprès de la première entité 11 en possession du module de sécurité 10 de changement d'abonnement au profit de la deuxième entité 12. Dans un exemple de réalisation où les première et deuxième entités 11, 12 sont un premier et un deuxième opérateurs de réseau mobile, une telle requête correspond à une demande de changement d'opérateur faite auprès du premier opérateur, de manière à rejoindre le deuxième opérateur.

Dans une étape suivante E1 de préparation du transfert, la première entité 11 envoie au module de sécurité 10 une requête de préparation d'un transfert. Plus précisément, la requête est envoyée au domaine de sécurité de l'émetteur 10-1.

Dans une étape E2 de réception de la requête de transfert et de préparation du transfert, le module de sécurité 10, plus précisément le domaine de sécurité de l'émetteur 10-1 prépare le transfert vers la deuxième entité 12 en calculant un jeton unique, dédié à la demande de transfert en cours. Dans un premier exemple de réalisation, le jeton est un aléa généré par le domaine de sécurité de l'émetteur 10-1 ; il est signé au moyen d'une clé secrète propre au domaine de sécurité de l'émetteur 10-1. La signature correspond ainsi à un message d'authentification, ou message « MAC » (de l'anglais « Message Authentication Code ») qui garantit l'intégrité du jeton. Le jeton unique est destiné à être présenté par la deuxième entité 12 et vérifié lors de la prise de contrôle effective du module 10 par celle-ci.

Dans une étape E3 de transmission du jeton, le domaine de sécurité de l'émetteur 10-1 envoie à la première entité 11 le jeton signé, c'est-à-dire le jeton et le message d'authentification associé. Le jeton signé est transmis de manière sécurisée. Dans l'exemple du réseau mobile où la première entité est un premier opérateur et la deuxième entité, un deuxième opérateur, le jeton est transmis sur le réseau du premier opérateur à travers un tunnel sécurisé, par exemple au moyen du protocole « SSL » (de l'anglais « Secure Socket Layer »).

Dans une étape E4 de retransmission, la première entité 11 transmet le jeton signé qu'il a reçu à la deuxième entité 12. La transmission de ce jeton est destinée à informer la deuxième entité 12 que le module 10 est prêt pour le transfert de contrôle. De préférence, le jeton est transmis de manière sécurisée à la deuxième entité 12. Dans un premier exemple de réalisation, un canal sécurisé est établi entre la première 11 et la deuxième entité 12. Les méthodes de mise en œuvre d'un canal sécurisé entre deux entités sont supposées connues et ne sont donc pas détaillées ici.

Dans une étape E5 de calcul de clés, consécutive à l'étape E4 de retransmission, la deuxième entité 12 calcule au moins une clé secrète destinée à être installée dans le domaine de sécurité de l'émetteur 10-1 du module 10 lors de la prise effective du contrôle du module 10 par la deuxième entité 12.

Dans une étape E6 de demande de certificat du module, la deuxième entité 12 envoie une requête de certificat au module de sécurité 10, plus précisément au domaine de sécurité de l'autorité de contrôle 10-2.

Dans une étape E7 d'envoi du certificat du module 10, consécutive à la réception de la demande de certificat envoyée au cours de l'étape précédente, le module de sécurité 10, plus précisément le domaine de sécurité de l'autorité de contrôle 10-2, envoie à la deuxième entité 12 le certificat associé à la clé publique du domaine de sécurité de l'autorité de contrôle 10-1. S'agissant d'une donnée publique, aucune précaution n'est nécessaire pour sécuriser l'envoi de ce certificat à la deuxième entité 12.

Dans une étape E8 de chiffrement, la deuxième entité 12 chiffre des données comprenant les clés qu'elle a calculées au cours de l'étape E5 de calcul de clés, ainsi que le jeton signé qu'elle a reçu de la première entité 11 au cours de l'étape E3 de retransmission. La donnée est chiffrée en appliquant un algorithme de chiffrement paramétré par la clé publique du domaine de sécurité de l'autorité de contrôle 10-2 extraite du certificat. L'algorithme de chiffrement à utiliser est précisé dans le certificat du module, dans un champ dédié. Un tel algorithme est par exemple l'algorithme « RSA » (du nom des inventeurs, « River, Shamir, et Adleman »). Ainsi, les clés et le jeton signé sont chiffrés à l'attention du domaine de sécurité de l'autorité de contrôle 10-2. Préalablement au chiffrement des données, la deuxième entité 12 peut vérifier la validité du certificat qu'elle a reçu au cours de l'étape précédente. Elle peut ainsi vérifier que le certificat n'a pas expiré ; elle peut remonter une chaîne complète de certification afin de s'assurer de la validité de la signature du certificat ; elle peut également vérifier que le certificat n'a pas été révoqué. Une telle vérification consiste de manière connue à interroger un serveur de révocation, ou à consulter une liste de certificats révoqués. La deuxième entité 12 peut ainsi vérifier que le certificat du module de sécurité 10 dont elle s'apprête à prendre le contrôle est valide.

Dans une étape E9 d'envoi des données chiffrées, la deuxième entité 12 envoie au module de sécurité 10, plus précisément au domaine de sécurité de l'émetteur 10-1 les données chiffrées.

Dans une étape E10 de demande de déchiffrement, le domaine de sécurité de l'émetteur 10-1 envoie au domaine de sécurité de l'autorité de contrôle 10-2 une requête de déchiffrement. La requête comprend les données chiffrées reçues précédemment. En effet, seule le domaine de sécurité de l'autorité de contrôle 10-2 peut déchiffrer les données chiffrées reçues par le domaine de sécurité de l'émetteur 10-1 puisque seul le domaine de sécurité de l'autorité de contrôle 10-2 possède la clé privée associée à la clé publique utilisée pour chiffrer les données.

Dans une étape E11 de déchiffrement, le domaine de sécurité de l'autorité de contrôle 10-2 déchiffre les données chiffrées au moyen de sa clé privée.

Dans une étape E12 d'envoi des données déchiffrées, le domaine de sécurité de l'autorité de contrôle 10-2 envoie les données déchiffrées au domaine de sécurité de l'émetteur 10-1.

Dans une étape E13 de vérification, le domaine de sécurité de l'émetteur 10-1 vérifie la validité du jeton signé compris dans les données déchiffrées. A cette fin le domaine de sécurité de l'émetteur 10-1 calcule un message d'authentification du jeton et vérifie qu'il correspond au message d'authentification reçu avec le jeton. Cette vérification permet de s'assurer que le jeton correspond bien au jeton qui a été envoyé à la première entité 11 au cours de l'étape E3 de transmission, et donc que le contrôle du module 10 est sur le point d'être donné à la même entité que celle pour laquelle la première entité 10 a initié le transfert du contrôle. Si la vérification est positive, alors dans une étape E14 de mise à jour, le domaine de sécurité de l'émetteur 10-1 mémorise les nouvelles clés de la deuxième entité 12 comprises dans les données déchiffrées, et efface toutes les clés initialement mémorisées et propres à la première entité 11. Ainsi, au terme de cette étape E14 de mise à jour, le contrôle du module a été transféré de manière effective de la première entité 11 à la deuxième entité 12. En effet, ce sont désormais des clés connues uniquement du domaine de sécurité de l'émetteur 10-1 et de la deuxième entité 12 qui sont installées sur le module de sécurité 10.

Dans une phase ultérieure (non représentée) d'utilisation, la deuxième entité 12 est apte à envoyer des ordres au module de sécurité 10, installer des données de manière sécurisée sur le module, installer des applications de fournisseurs de service qui ont passé contrat avec la deuxième entité 12 à cet effet, etc. Par exemple, dans le cas où la deuxième entité est un opérateur de réseau mobile, l'opérateur peut envoyer au module de sécurité une nouvelle clé d'authentification Kᵢ, propre à l'abonné qui vient de s'abonner auprès de la deuxième entité 12 pour ses accès au réseau via le deuxième opérateur. Elle peut éventuellement envoyer un nouvel algorithme d'authentification apte à authentifier le module lors d'un accès au réseau.

Dans un autre exemple de réalisation, le certificat et le couple clé publique/clé privée propre à l'autorité de contrôle sont stockés dans une autre entité du module de sécurité 10 que le domaine de sécurité de l'autorité de contrôle 10-2. Par exemple, ils sont stockés dans un autre domaine de sécurité logique du module 10, ou dans un autre domaine physique du module 10, par exemple une zone mémoire qui mémorise le système d'exploitation.

Dans un autre exemple de réalisation, la demande de transfert envoyée par la première entité 11 au domaine de sécurité de l'émetteur 10-1 au cours de l'étape E1 de préparation du transfert, comprend un certificat propre à la deuxième entité 12. Ce certificat certifie une clé publique d'un couple clé privée/clé publique propre à la deuxième entité 12. L'envoi du certificat au domaine de sécurité de l'émetteur 10-1 est destiné à transmettre la clé publique certifiée de la deuxième entité 12 au domaine de sécurité de l'émetteur 10-1 afin que le domaine de sécurité de l'émetteur 10-1 puisse authentifier la deuxième entité 12, lorsque celle-ci envoie les clés secrètes destinées à lui donner le contrôle du module 10 au cours de l'étape E9 d'envoi des données chiffrées. Ainsi, dans cet exemple de réalisation, la deuxième entité 12 signe au moyen de sa clé privée les données chiffrées au cours de l'étape E8 de chiffrement. Le domaine de sécurité de l'émetteur 10-1 vérifie alors la signature des données chiffrées qui lui sont envoyées au cours de l'étape E9, au moyen de la clé publique de la deuxième entité 12 présente dans le certificat que la première entité 11 lui a envoyé. Par ailleurs, la première entité 11 peut préalablement à l'envoi de la demande de transfert au domaine de sécurité de l'émetteur 10-1, vérifier la validité du certificat de la deuxième entité 12. Par exemple, si le certificat a expiré ou si le certificat est révoqué, la première entité ne transmet pas la requête de transfert au domaine de sécurité de l'émetteur.

Dans un autre exemple de réalisation, la demande de transfert envoyée au cours de l'étape E1 par la première entité 11 comprend un identifiant unique et universel de la deuxième entité 12. Cet identifiant est destiné à permettre au domaine de sécurité de l'émetteur 10-1 de s'assurer que l'entité qui va prendre le contrôle du module est bien celle pour laquelle la première entité 11 a émis une requête. Ainsi, dans cet exemple, la deuxième entité 12 transmet au domaine de sécurité de l'émetteur 10-1 au cours de l'étape E9, les données chiffrées et signées au moyen de sa clé privée, ainsi que son certificat. Le domaine de sécurité de l'émetteur 10-1 peut alors vérifier que le champ du certificat correspondant à l'identifiant unique du propriétaire du certificat est bien égal à l'identifiant unique que lui a transmis la première entité 11. La vérification de la signature permet de s'assurer que le certificat est bien associé à la deuxième entité 12 et que l'identifiant unique est donc bien celui de la deuxième entité 12. Dans le cas où les première et deuxième entités sont des opérateurs de téléphonie mobile, cet identifiant est un code universel de réseau mobile (l'acronyme habituellement utilisé est « MNC », de l'anglais « Mobile Network Code »).

Dans un autre exemple de réalisation, le domaine de sécurité de l'émetteur 10-1 transmet à la première entité 11 au cours de l'étape E3, un jeton qui comprend, outre une valeur aléatoire, un identifiant unique du module de sécurité 10. Par exemple, l'identifiant unique est concaténé à la valeur aléatoire. L'identifiant unique est par exemple un numéro de série interne du module de sécurité, ou « ICCID » (pour « Integrated Circuit Card ID »). Ainsi, l'identifiant unique du module de sécurité 10, qui est compris dans le jeton signé est transmis à la deuxième entité 12 au cours de l'étape E4 de retransmission. Cet identifiant du module 10 est destiné à garantir à la deuxième entité 12 qu'elle envoie ses clés au bon module de sécurité 10. Pour ce faire, la deuxième entité 12 vérifie la signature du jeton, puis vérifie par exemple lorsqu'elle reçoit le certificat au terme de l'étape E7, que cet identifiant figure dans le certificat du module 10 qu'elle a demandé au cours de l'étape E6. L'identifiant figure par exemple dans le champ détenteur du certificat du domaine de sécurité de l'autorité de contrôle 10-2.

L'invention n'est pas limitée à ces modes de réalisation. Ainsi, d'autres modes de réalisation peuvent consister à combiner plusieurs des modes décrits précédemment. Ainsi, il est possible de transmettre de la première entité 11 au domaine de sécurité de l'émetteur 10-1, un certificat de la deuxième entité 12 et un identifiant unique de la deuxième entité 12, et de transmettre à la première entité 11 au cours de l'étape E3 un jeton qui comprend un identifiant unique du module 10. On comprend qu'en combinant plusieurs modes de réalisation, la sécurité du procédé est renforcée.

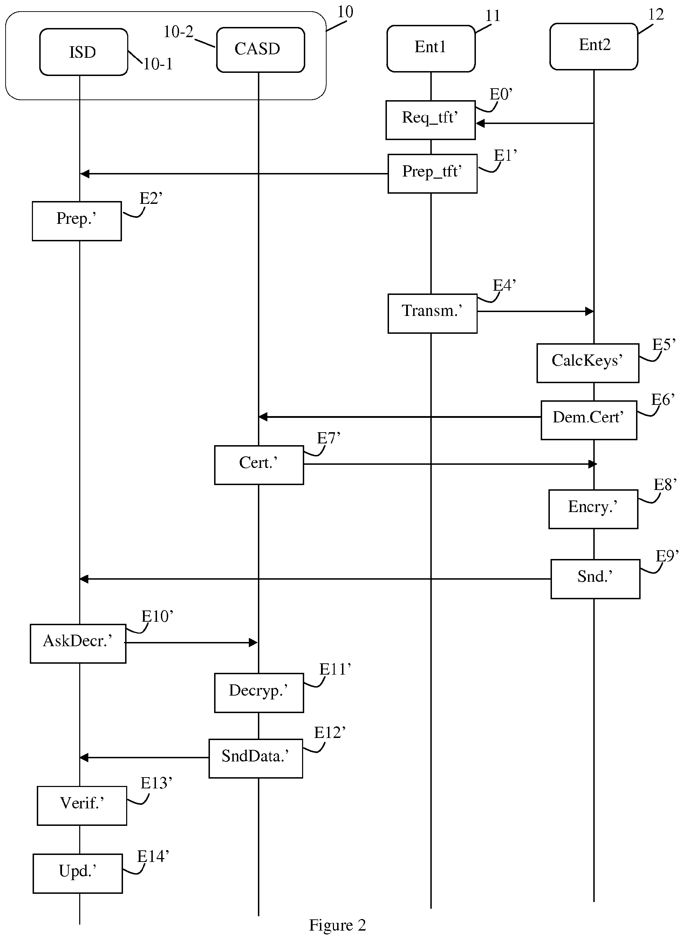

Un procédé de transfert du contrôle d'un module de sécurité d'une première entité à une deuxième entité, selon un second exemple de réalisation va maintenant être décrit, en relation avec la figure 2.

Dans cet exemple de réalisation, aucun jeton unique n'est calculé par le domaine de sécurité de l'émetteur 10-1.

Dans une étape initiale E0' de demande de transfert, comparable à l'étape E0 du procédé décrit en relation avec la figure 1, la première entité 11 reçoit de la deuxième entité 12 une demande de transfert du contrôle du module 10 à son attention. Dans un exemple de réalisation, la demande de transfert comprend un identifiant unique propre à la deuxième entité 12. Dans le cas où les première et deuxième entités sont des opérateurs de réseau, cet identifiant est le code de réseau mobile MNC du deuxième opérateur.

Dans une étape suivante E1' de préparation du transfert, la première entité 11 envoie au module de sécurité 10 une requête de préparation d'un transfert. Plus précisément, la requête est envoyée au domaine de sécurité de l'émetteur 10-1. Dans cet exemple de réalisation, la requête de préparation du transfert comprend un certificat d'entité, propre à la deuxième entité 12. De manière classique le certificat de l'entité comprend un ensemble de champs, comme le nom du détenteur du certificat, en l'espèce la deuxième entité 12, une clé publique d'entité, etc. La clé publique d'entité est associée à une clé privée d'entité détenue et connue uniquement de la deuxième entité 12. L'ensemble des champs est signé par une clé privée d'une autorité de certification. Ainsi, le certificat d'entité certifie la clé publique de la deuxième entité 12. La deuxième entité 12 peut envoyer son certificat à la première entité 11. Dans le cas où la deuxième entité 12 envoie à la première entité 11 au cours de l'étape précédente son identifiant unique, la première entité 11 peut obtenir le certificat par interrogation d'un serveur de certificats en indiquant l'identifiant unique de la deuxième entité 12.

Dans une étape E2' de réception de la requête de transfert, le module de sécurité 10, plus précisément le domaine de sécurité de l'émetteur 10-1 reçoit la requête de préparation du transfert. Le domaine de sécurité de l'émetteur mémorise le certificat de la deuxième entité 12.

Dans une étape E4' d'information, la première entité 11 informe la deuxième entité 12 que le module de sécurité 10 est prêt pour le transfert du contrôle.

Dans une étape E5' de calcul de clés, consécutive à l'étape E4' d'information, la deuxième entité 12 calcule au moins une clé secrète destinée à être installée dans le domaine de sécurité de l'émetteur 10-1 du module 10 lors de la prise effective du contrôle du module 10 par la deuxième entité 12.

Dans une étape E6' de demande de certificat du module, la deuxième entité 12 envoie une requête de certificat au module de sécurité 10, plus précisément au domaine de sécurité de l'autorité de contrôle 10-2.

Dans une étape E7' d'envoi du certificat du module 10, consécutive à la réception de la demande de certificat envoyée au cours de l'étape précédente, le module de sécurité 10, plus précisément le domaine de sécurité de l'autorité de contrôle 10-2, envoie à la deuxième entité 12 le certificat associé à la clé publique du domaine de sécurité de l'autorité de contrôle 10-1.

Dans une étape E8' de chiffrement, la deuxième entité 12 chiffre des données comprenant les clés qu'elle a calculées au cours de l'étape E5' de calcul de clés. Les données sont chiffrées en appliquant un algorithme de chiffrement paramétré par la clé publique du domaine de sécurité de l'autorité de contrôle 10-2 extraite du certificat du module. Les données chiffrées sont ensuite signées au moyen de la clé privée de la deuxième entité 12. Ainsi, les données sont chiffrées à l'attention du domaine de sécurité de l'autorité de contrôle 10-2, puis signées par la deuxième entité 12. Préalablement au chiffrement des données, la deuxième entité 12 peut vérifier la validité du certificat qu'elle a reçu du deuxième domaine de sécurité 10-2 au cours de l'étape précédente.

Dans une étape E9' d'envoi des données chiffrées, la deuxième entité 12 envoie au module de sécurité 10, plus précisément au domaine de sécurité de l'émetteur 10-1 les données chiffrées et signées.

Dans une étape E10' de demande de déchiffrement, le domaine de sécurité de l'émetteur 10-1 envoie au domaine de sécurité de l'autorité de contrôle 10-2 une requête de déchiffrement. La requête comprend les données chiffrées reçues précédemment. En effet, seule le domaine de sécurité de l'autorité de contrôle 10-2 peut déchiffrer les données chiffrées reçues par le domaine de sécurité de l'émetteur 10-1 puisque seul le domaine de sécurité de l'autorité de contrôle 10-2 possède la clé privée associée à la clé publique utilisée pour chiffrer les données.

Dans une étape E11' de déchiffrement, le domaine de sécurité de l'autorité de contrôle 10-2 déchiffre les données chiffrées au moyen de sa clé privée.

Dans une étape E12' d'envoi des données déchiffrées, le domaine de sécurité de l'autorité de contrôle 10-2 envoie les données déchiffrées au domaine de sécurité de l'émetteur 10-1.

Dans une étape E13' de vérification, le domaine de sécurité de l'émetteur vérifie la signature des données chiffrées au moyen de la clé publique du certificat de la deuxième entité 12. Si la vérification est positive, cela signifie que les données chiffrées proviennent de la deuxième entité 12 pour laquelle le domaine de sécurité 10-1 a reçu une demande de transfert du contrôle au cours de l'étape E'1. En effet, seul le détenteur de la clé privée associée à la clé publique certifiée par le certificat reçu par le domaine de sécurité de l'émetteur 10-1 au cours de l'étape E1' est apte à signer les données chiffrées. Dans ce mode de réalisation, l'étape E13' de vérification peut être exécutée avant l'étape E10' de demande de déchiffrement.

Si la vérification effectuée au cours de l'étape précédente est positive, alors dans une étape E14' de mise à jour, le domaine de sécurité de l'émetteur 10-1 mémorise les nouvelles clés de la deuxième entité 12 comprises dans les données déchiffrées, et efface toutes les clés initialement mémorisées et propres à la première entité 11. Ainsi, au terme de cette étape E14' de mise à jour, le contrôle du module a été transféré de manière effective de la première entité 11 à la deuxième entité 12. En effet, ce sont désormais des clés connues uniquement du domaine de sécurité de l'émetteur 10-1 et de la deuxième entité 12 qui sont installées sur le module de sécurité 10.

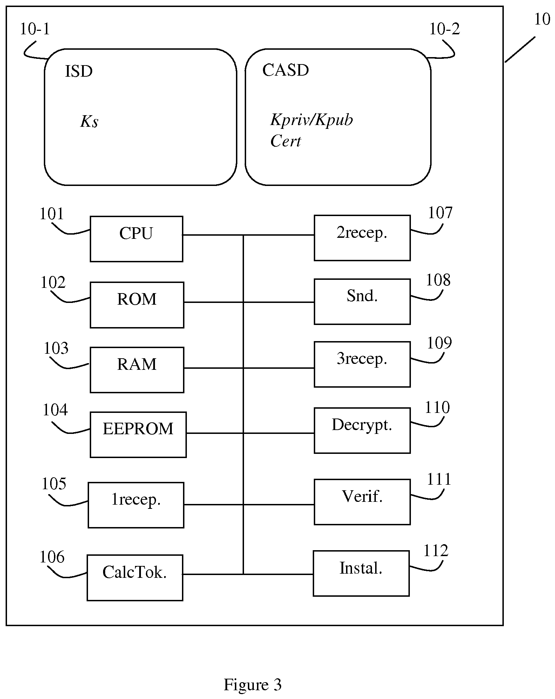

Un module de sécurité 10 apte à mettre en œuvre le procédé décrit précédemment va maintenant être décrit en relation avec la figure 3.

Par définition, un module de sécurité désigne un module apte à réaliser des opérations critiques, sensibles, dans un environnement sécurisé. Ces opérations sont par exemple le stockage de données secrètes, des opérations cryptographiques, etc.

Dans un exemple de réalisation, le module de sécurité 10 selon l'invention est conforme aux spécifications GlobalPlatform et comprend donc plusieurs domaines de sécurité logiques :
- un premier domaine de sécurité, ou domaine de sécurité de l'émetteur 10-1, et
- un deuxième domaine de sécurité, ou domaine de sécurité d'une autorité de contrôle 10-2.

Le premier domaine comprend au moins une clé secrète Ks propre à une entité qui contrôle de module de sécurité et destinée à sécuriser les échanges entre le module et des entités externes. Le deuxième domaine de sécurité 10-2 comprend un couple clé privée Kpriv/clé publique Kpub, ainsi qu'un certificat Cert destiné à certifier la clé publique Kpub du couple de clés. Le certificat est émis par une entité tierce (non représentée sur la figure 2), indépendante de l'entité qui contrôle le module 10. Dans une variante de réalisation (non représentée), la clé secrète et le certificat sont stockés dans un autre domaine de sécurité logique du module 10, ou dans un autre domaine physique du module 10, par exemple une zone mémoire qui mémorise le système d'exploitation

Les domaines de sécurité logiques s'appuient par ailleurs sur :
- un processeur 101, ou « CPU » (de l'anglais « Central Processing Unit »), ou unité de traitement. Le processeur 101 est relié à un ensemble de mémoires :
- une mémoire morte 102, ou « ROM » (pour « Read Only Memory »), adaptée pour mémoriser un système d'exploitation du module, des mécanismes de sécurité, comme par exemple des algorithmes cryptographiques,
- une mémoire vive 103, ou « RAM » (pour « Random Access Memory »), qui permet d'effectuer des calculs, de charger des instructions, de les exécuter,
- une mémoire programmable et effaçable 104, ou « EEPROM » (pour « Electrically Erasable Programmable Read Only Memory »), qui contient des éléments propres au détenteur du module et au type de réseau pour lequel le module est prévu. Ainsi, la mémoire programmable 104 mémorise la clé secrète Ks du domaine de sécurité de l'émetteur 10-1, ainsi que le certificat et le couple de clés Kpriv/Kpub du domaine de sécurité de l'autorité de contrôle 10-2.

Le module de sécurité 10 héberge également une application sous forme de programme, apte à mettre en œuvre le procédé de l'invention. A cette fin, le module 10 comprend également :
- des moyens 106 de calcul et d'envoi d'un jeton, agencés pour calculer et envoyer un jeton unique à la première entité, ledit jeton comprenant une valeur aléatoire. Les moyens 106 de calcul et d'envoi sont agencés pour mettre en œuvre les étapes E2 et E3 du procédé de transfert du contrôle, précédemment décrit ;
- des premiers moyens de réception 105, agencés pour recevoir une requête d'obtention du certificat en provenance de la deuxième entité. Les premiers moyens de réception 105 sont agencés pour mettre en œuvre les étapes E6 et E6' des procédés décrits précédemment ;
- des moyens d'envoi 108, agencés pour envoyer ledit certificat suite à la réception d'une requête par les premiers moyens de réception 105. Les moyens d'envoi 108 sont agencés pour mettre en œuvre les étapes E7 et E7' d'envoi des procédés de transfert du contrôle d'un module précédemment décrits ;
- des deuxièmes moyens de réception 107, agencés pour recevoir de la deuxième entité une donnée chiffrée au moyen de la clé publique certifiée par ledit certificat, la donnée comprenant au moins une deuxième clé secrète de contrôle propre à la deuxième entité et le jeton. La donnée chiffrée est éventuellement signée au moyen de la clé privée propre à la deuxième entité. Les deuxièmes moyens de réception 107 sont agencés pour mettre en œuvre les étapes E9 et E9' des procédés précédemment décrits ;
- des troisièmes moyens de réception 109, agencés pour recevoir de la première entité 11 (non représentée sur la figure 2) une requête de transfert du contrôle vers la deuxième entité 12 (non représentée). La requête de transfert peut comprendre le certificat de la deuxième entité 12. Les troisèmes moyens de réception 109 sont adaptés pour mettre en œuvre les étapes E1 et E1' des procédés précédemment décrits ;
- des moyens de déchiffrement 110, agencés pour déchiffrer ladite donnée. Les moyens de déchiffrement 110 sont agencés pour mettre en œuvre les étapes de déchiffrement E11 et E11' des procédé décrits précédemment ;
- des moyens de vérification 111, agencés pour vérifier les données chiffrées. Dans le premier exemple de réalisation, les moyens de vérification 111 vérifient le jeton signé par le domaine de sécurité de l'émetteur 10-1. Dans le deuxième exemple de réalisation du procédé, les moyens de vérification 111 vérifient la signature des données chiffrées au moyen de la clé publique de la deuxième entité. Les moyens de vérification 111 sont adaptés pour mettre en œuvre les étapes E13 et E13' des procédés de transfert du contrôle d'un module décrits précédemment ;
- des moyens d'installation 112, agencés pour installer ladite au moins deuxième clé secrète de contrôle, la deuxième entité contrôlant alors le premier domaine de sécurité. Les moyens d'installation 112 sont agencés pour mettre en œuvre les étapes E14 et E14' des procédés précédemment décrits.

Dans l'exemple présenté avec la figure 2, les moyens décrits précédemment sont installés par un fabricant de modules de sécurité dans la mémoire EEPROM 104, avant que l'équipement qui embarque le module ne soit commercialisé. Dans un deuxième exemple de réalisation, les moyens sont installés par le fabricant de modules dans la mémoire ROM 102. Dans un troisième exemple de réalisation, le programme est téléchargé sur l'équipement qui embarque le module, après que l'équipement ait été mis en circulation.

## Revendications

1. Procédé de transfert du contrôle exclusif d'un module de sécurité (10) d'une première entité (11) à une deuxième entité (12), le module de sécurité comprenant un premier domaine de sécurité (10-1) contrôlé par la première entité au moyen d'au moins une première clé secrète de contrôle propre à la première entité, et un deuxième domaine de sécurité (10-2), ledit deuxième domaine de sécurité comprenant un certificat d'une clé publique d'une autorité de contrôle et une clé privée de l'autorité de contrôle, le procédé comprenant les étapes, mises en œuvre par le module de sécurité, de :
- réception (E6, E6') par le deuxième domaine de sécurité d'une requête d'obtention du certificat en provenance de la deuxième entité,
- envoi (E7, E7') dudit certificat par le deuxième domaine de sécurité,
- réception (E9, E9') par le premier domaine de sécurité en provenance de la deuxième entité de données chiffrées au moyen de la clé publique certifiée par ledit certificat, les données comprenant au moins une deuxième clé secrète de contrôle propre à la deuxième entité,
- déchiffrement (E11, E11') desdites données par le deuxième domaine de sécurité,
- vérification (E13, E13') des données par le premier domaine de sécurité, et
- si la vérification est positive, remplacement (E14, E14') par le premier domaine de sécurité de la au moins première clé secrète de contrôle par ladite au moins deuxième clé secrète de contrôle.

2. Procédé selon la revendication 1, comprenant une étape de réception (E1, E1') en provenance de la première entité d'une requête de transfert du contrôle vers la deuxième entité.

3. Procédé selon la revendication 2, dans lequel la requête de transfert comprend un certificat de la deuxième entité.

4. Procédé selon la revendication 2, dans lequel la requête de transfert comprend un identifiant unique de la deuxième entité.

5. Procédé selon la revendication 1, comprenant une étape de calcul et d'envoi (E2, E3) par le premier domaine de sécurité à la première entité d'un jeton unique signé.

6. Procédé selon la revendication 5, dans lequel les données comprennent également le jeton unique signé par le premier domaine de l'émetteur.

7. Procédé selon la revendication 5, dans lequel le jeton unique comprend en outre un identifiant propre au module de sécurité.

8. Procédé selon la revendication 1, dans lequel les données chiffrées sont signées par la deuxième entité, la vérification des données consistant à vérifier la signature des données.

9. Procédé selon la revendication 1, dans lequel l'étape de déchiffrement comprend les sous-étapes de :
- envoi (E10, E10') par le premier domaine de sécurité au domaine de sécurité de l'autorité de contrôle, d'une demande de déchiffrement desdites données,
- déchiffrement (E11, E11') desdites données par le domaine de sécurité de l'autorité de contrôle au moyen de la clé secrète de l'autorité de contrôle,
- envoi (E12, E12') par le domaine de sécurité de l'autorité de contrôle au premier domaine de sécurité de données déchiffrées.

10. Module de sécurité, comprenant un premier domaine de sécurité et un deuxième domaine de sécurité, ledit deuxième domaine comprenant un certificat d'une clé publique d'une autorité de contrôle et une clé secrète de l'autorité de contrôle, le premier domaine de sécurité étant contrôlé exclusivement par une première entité au moyen d'au moins une première clé de contrôle propre à la première entité, le module comprenant :
- des premiers moyens de réception (105), agencés pour recevoir, par le deuxième domaine de sécurité, une requête d'obtention du certificat en provenance d'une deuxième entité,
- des moyens d'envoi (108), agencés pour envoyer, par le deuxième domaine de sécurité, ledit certificat à la deuxième entité,
- des deuxièmes moyens de réception (107), agencés pour recevoir, par le premier domaine de sécurité, de la deuxième entité des données chiffrées au moyen de la clé publique certifiée par ledit certificat, les données comprenant au moins une deuxième clé secrète de contrôle propre à la deuxième entité,
- des moyens de déchiffrement (110), agencés pour déchiffrer, par le deuxième domaine de sécurité, lesdites données,
- des moyens de vérification (111), agencés pour vérifier, par le premier domaine de sécurité, lesdites données, et
- des moyens d'installation (112), agencés pour installer, par le premier domaine de sécurité, ladite au moins deuxième clé secrète de contrôle, la deuxième entité contrôlant alors le premier domaine de sécurité.

11. Programme destiné à être installé dans un module de sécurité, comprenant des instructions pour la mise en œuvre des étapes du procédé de transfert du contrôle du module d'une première entité à une deuxième entité, selon l'une des revendications 1 à 9 qui sont exécutées par le module, lorsque le programme est exécuté par un processeur.

12. Support de données sur lequel est enregistré le programme d'ordinateur selon la revendication 11.

## Patentansprüche

1. Verfahren zur Übergabe der alleinigen Kontrolle eines Sicherheitsmoduls (10) von einer ersten Einheit (11) an eine zweite Einheit (12), wobei das Sicherheitsmodul eine erste Sicherheitsdomäne (10-1), die durch die erste Einheit mittels mindestens eines ersten geheimen Kontrollschlüssels der ersten Einheit kontrolliert wird, und eine zweite Sicherheitsdomäne (10-2) beinhaltet, wobei die zweite Sicherheitsdomäne ein Zertifikat eines öffentlichen Schlüssels einer Kontrollinstanz und einen privaten Schlüssel der Kontrollinstanz beinhaltet, wobei das Verfahren die folgenden Schritte, die durch das Sicherheitsmodul implementiert werden, beinhaltet:
- Empfangen (E6, E6'), durch die zweite Sicherheitsdomäne, einer Anfrage nach Erhalt des Zertifikats von der zweiten Einheit,
- Senden (E7, E7') des Zertifikats durch die zweite Sicherheitsdomäne,
- Empfangen (E9, E9'), durch die erste Sicherheitsdomäne und von der zweiten Einheit, von Daten, die mittels des öffentlichen Schlüssels, der durch das Zertifikat zertifiziert ist, verschlüsselt sind, wobei die Daten mindestens einen zweiten geheimen Kontrollschlüssel der zweiten Einheit beinhalten,
- Entschlüsseln (E11, E11') der Daten durch die zweite Sicherheitsdomäne,
- Überprüfen (E13, E13') der Daten durch die erste Sicherheitsdomäne und
- wenn die Überprüfung positiv ist, Ersetzen (E14, E14'), durch die erste Sicherheitsdomäne, des mindestens ersten geheimen Kontrollschlüssels durch den mindestens zweiten geheimen Kontrollschlüssel.

2. Verfahren nach Anspruch 1, beinhaltend einen Schritt des Empfangens (E1, E1'), von der ersten Einheit, einer Anfrage nach Übergabe der Kontrolle an die zweite Einheit.

3. Verfahren nach Anspruch 2, wobei die Übergabeanfrage ein Zertifikat der zweiten Einheit beinhaltet.

4. Verfahren nach Anspruch 2, wobei die Übergabeanfrage eine eindeutige Kennung der zweiten Einheit beinhaltet.

5. Verfahren nach Anspruch 1, beinhaltend einen Schritt des Berechnens und des Sendens (E2, E3), durch die erste Sicherheitsdomäne an die erste Einheit, eines signierten eindeutigen Tokens.

6. Verfahren nach Anspruch 5, wobei die Daten auch das durch die erste Domäne des Senders signierte eindeutige Token beinhalten.

7. Verfahren nach Anspruch 5, wobei das eindeutige Token ferner eine Kennung des Sicherheitsmoduls beinhaltet.

8. Verfahren nach Anspruch 1, wobei die verschlüsselten Daten durch die zweite Einheit signiert sind, wobei das Überprüfen der Daten darin besteht, die Signatur der Daten zu überprüfen.

9. Verfahren nach Anspruch 1, wobei der Schritt des Entschlüsselns die folgenden Unterschritte beinhaltet:
- Senden (E10, E10'), durch die erste Sicherheitsdomäne an die Sicherheitsdomäne der Kontrollinstanz, einer Anforderung nach Entschlüsselung der Daten,
- Entschlüsseln (E11, E11') der Daten durch die Sicherheitsdomäne der Kontrollinstanz mittels des geheimen Schlüssels der Kontrollinstanz,
- Senden (E12, E12'), durch die Sicherheitsdomäne der Kontrollinstanz an die erste Sicherheitsdomäne, von entschlüsselten Daten.

10. Sicherheitsmodul, das eine erste Sicherheitsdomäne und eine zweite Sicherheitsdomäne beinhaltet, wobei die zweite Domäne ein Zertifikat eines öffentlichen Schlüssels einer Kontrollinstanz und einen geheimen Schlüssel der Kontrollinstanz beinhaltet, wobei die erste Sicherheitsdomäne alleinig durch eine erste Einheit mittels eines ersten Kontrollschlüssels der ersten Einheit kontrolliert wird, wobei das Modul Folgendes beinhaltet:
- erste Empfangsmittel (105), die dazu eingerichtet sind, durch die zweite Sicherheitsdomäne eine Anfrage nach Erhalt des Zertifikats von einer zweiten Einheit zu empfangen,
- Sendemittel (108), die dazu eingerichtet sind, das Zertifikat durch die zweite Sicherheitsdomäne an die zweite Einheit zu senden,
- zweite Empfangsmittel (107), die dazu eingerichtet sind, durch die erste Sicherheitsdomäne Daten, die mittels des öffentlichen Schlüssels, der durch das Zertifikat zertifiziert ist, verschlüsselt sind, von der zweiten Einheit zu empfangen, wobei die Daten mindestens einen zweiten geheimen Kontrollschlüssel der zweiten Einheit beinhalten,
- Entschlüsselungsmittel (110), die dazu eingerichtet sind, die Daten durch die zweite Sicherheitsdomäne zu entschlüsseln,
- Überprüfungsmittel (111), die dazu eingerichtet sind, die Daten durch die erste Sicherheitsdomäne zu überprüfen, und
- Installationsmittel (112), die dazu eingerichtet sind, den mindestens zweiten geheimen Kontrollschlüssel durch die erste Sicherheitsdomäne zu installieren, wobei nun die zweite Einheit die erste Sicherheitsdomäne kontrolliert.

11. Programm, das dazu bestimmt ist, in einem Sicherheitsmodul installiert zu sein, beinhaltend Anweisungen zur Implementierung der Schritte des Verfahrens zur Übergabe der Kontrolle des Moduls von einer ersten Einheit an eine zweite Einheit nach einem der Ansprüche 1 bis 9, die durch das Modul ausgeführt werden, wenn das Programm durch einen Prozessor ausgeführt wird.

12. Datenträger, auf dem das Computerprogramm nach Anspruch 11 gespeichert ist.

## Claims

1. Method for transferring exclusive control of a security module (10) from a first entity (11) to a second entity (12), the security module comprising a first security domain (10-1), which is controlled by the first entity by means of at least one first secret control key specific to the first entity, and a second security domain (10-2), said second security domain comprising a certificate of a public key of a controlling authority and a private key of the controlling authority, the method comprising the steps, implemented by the security module, of:
- the second security domain receiving (E6, E6'), from the second entity, a request to obtain the certificate,
- the second security domain sending (E7, E7') said certificate,
- the first security domain receiving (E9, E9'), from the second entity, data encrypted by means of the public key certified by said certificate, the data comprising at least one second secret control key specific to the second entity,
- the second security domain decrypting (E11, E11') said data,
- the first security domain verifying (E13, E13') the data, and
- if the verification is positive, the first security domain replacing (E14, E14') the at least first secret control key with said at least second secret control key.

2. Method according to Claim 1, comprising a step of receiving (E1, E1'), from the first entity, a request to transfer control to the second entity.

3. Method according to Claim 2, wherein the transfer request comprises a certificate of the second entity.

4. Method according to Claim 2, wherein the transfer request comprises a unique identifier of the second entity.

5. Method according to Claim 1, comprising a step of the first security domain calculating and sending (E2, E3) to the first entity a unique signed token.

6. Method according to Claim 5, wherein the data also comprise the unique token signed by the first issuer domain.

7. Method according to Claim 5, wherein the unique token further comprises an identifier specific to the security module.

8. Method according to Claim 1, wherein the encrypted data are signed by the second entity, the verification of the data consisting in verifying the signature of the data.

9. Method according to Claim 1, wherein the decrypting step comprises the sub-steps of:
- the first security domain sending (E10, E10') a request to decrypt said data to the controlling authority security domain,
- the controlling authority security domain decrypting (E11, E11') said data by means of the secret key of the controlling authority,
- the controlling authority security domain sending (E12, E12') decrypted data to the first security domain.

10. Security module, comprising a first security domain and a second security domain, said second domain comprising a certificate of a public key of a controlling authority and a secret key of the controlling authority, the first security domain being controlled exclusively by a first entity by means of at least one first control key specific to the first entity, the module comprising:
- first receiving means (105) designed for the second security domain to receive, from a second entity, a request to obtain the certificate,
- sending means (108) designed for the second security domain to send said certificate to the second entity,
- second receiving means (107) designed for the first security domain to receive, from the second entity, data encrypted by means of the public key certified by said certificate, the data comprising at least one second secret control key specific to the second entity,
- decrypting means (110) designed for the second security domain to decrypt said data,
- verifying means (111) designed for the first security domain to verify said data, and
- installation means (112) designed for the first security domain to install said at least second secret control key, the second entity then controlling the first security domain.

11. Program that is intended to be installed in a security module and comprises instructions for implementing the steps of the method for transferring control of the module from a first entity to a second entity according to one of Claims 1 to 9, which are executed by the module when the program is executed by a processor.

12. Data storage medium on which the computer program according to Claim 11 is recorded.
